# EUROPÄISCHE PATENTANMELDUNG

(11) **EP 2 200 143 A2**
(43) Veröffentlichungstag der Anmeldung: **23.06.2010**
(21) Anmeldenummer: 09015477.4
(22) Anmeldetag: 15.12.2009
(51) Int. Cl.: H02J 3/00

(54) **Verfahren zum Betreiben von elektrischen und/oder elektromechanischen Systemen**

(30) Priorität: 31.07.2009 DE 102009035853; 16.12.2008 DE 102008062112
(71) Anmelder: Wittenstein AG, 97999 Igersheim (DE)
(72) Erfinder: Wrobel, Miroslaw, 97753 Karlstadt (DE); Friedmann, Jan, 97237 Altertheim (DE); Bayer, Thomas, 97999 Igersheim (DE)
(74) Vertreter: Weiss, Peter

(57) **Zusammenfassung**

Bei einem Verfahren zum Betreiben von elektrischen und/oder elektromechanischen Systemen mit zumindest einem Verbraucher (8, 9) durch Energie aus einem Energiespeicher (7), der zumindest teilweise von einer primären Energiequelle (5) mit Energie versorgt wird, soll eine einen Energiespeicher (7) umfassende Energieplattform einerseits mit der primären Energiequelle (5) und andererseits mit dem Verbraucher (8, 9) verbunden und anhand des Energiebedarfs des Verbrauchers (8, 9) gesteuert werden.

## Beschreibung

Die Erfindung betrifft ein Verfahren zum Betreiben von elektrischen und/oder elektromechanischen Systemen mit zumindest einem Verbraucher durch Energie aus einem Energiespeicher, der zumindest teilweise von einer primären Energiequelle mit Energie versorgt wird, sowie ein entsprechendes System und eine Energieplattform.

### Stand der Technik

Die Versorgung von Verbrauchern mit Energie wird heute so ausgelegt, dass sie die an sie gestellte Leistungsanforderung erfüllen kann. Diese Anforderung, die dem Design zugrunde gelegt wird, richtet sich meist nach Spitzenleistungen, die allerdings nur über kurze Zeiträume tatsächlich benötigt werden. Den Grossteil der Zeit werden die Verbraucher im Mittellastbereich betrieben. Die Dimensionierung der die Verbraucher versorgenden Infrastruktur mit bspw. Strom, Druckluft, Kühlmittel, Klimatisierung usw. erfolgt jedoch nach maximalen Bedürfnissen der Anlage. Somit ist die Versorgung im zeitlichen Mittel gesehen, fast immer überdimensioniert, was natürlich entsprechende Folgen für die Anschaffungskosten, Kosten des Energieverbrauchs und der Infrastruktur zur Folge hat.

Im speziellen werden elektrische Versorgungsleitungen heute so ausgelegt, dass die Versorgung einer Maschine in der Lage ist, die maximal denkbare Belastung der Stromquelle (Netz, Batterie, Akku, Brennstoffzelle) durch diese Maschine zumindest kurzzeitig sicher zu stellen. Die Maximalbelastung zeichnet sich dadurch aus, dass sie meist relativ selten und kurzfristig auftritt. Sie übertrifft die im Durchschnitt benötigte Leistung um ein Vielfaches. Diese Maximalleistungen treten z.B. in Antriebssträngen immer während positiven oder auch negativen Beschleunigungsvorgängen auf.

Im Allgemeinen wird eine statische Versorgung durch das elektrische Netz auf unterschiedliche Spannungsniveaus statisch verteilt. Ein bidirektionaler Energietransfer zwischen den Spannungsniveaus ist schlecht oder nicht möglich. Weiterhin ist die Versorgung rein passiv, d.h., eine Dimensionierung und Steuerung des Verbrauchs bzw. der zur Verfügung gestellten Energie erfolgt nur über die zeitinvariante Dimension des Netzanschlusses.

Auf Seiten der Netzbetreiber heisst dies wiederum, dass auf Schwankungen im Stromverbrauch nur durch die Stromproduktion (z.B. mit der Einspeisung kurzfristig regelbarer und zur Verfügung stehender Energie) reagiert werden kann. Dies setzt idealerweise eine bekannte Menge an regelbarer Energie voraus. Dies wird mit zunehmendem Anteil der angekoppelten erneuerbaren Energien immer schlechter möglich, da sie selten planbar einsatzbereit sind. Die einzigen Regelgrössen, die zur Verfügung stehen, sind Erfahrungswerte über den durchschnittlichen Tagesablauf des Energiebedarfs und die momentanen Verbrauchswerte. Die Garantie der Stabilität der Stromnetze ist eine der anspruchsvollsten Aufgaben im Bereich der Energiebereitstellung.. Somit unterliegt auch der momentane Energiebedarf z.B. eines Landes grossen zeitlichen und regionalen Schwankungen. Die Versorgung mit elektrischer Energie durch die Netzbetreiber erfolgt bedarfsgerecht und zentral geregelt. Die ungefähr konstante Grundlast wird dabei von Grundlastkraftwerken, wie Kohle- oder Atommeilern, zur Verfügung gestellt. Die fluktuierende, momentan benötigte Leistung wird gemessen und je nach Zu- bzw. Abnahme des Bedarfes wird die Kraftwerksleistung durch unterschiedlich schnell steuerbare Kraftwerkstypen und/oder durch zuschaltbare Lasten (Pumpspeicherwerke) geregelt. Die Schwankungen ergeben sich teilweise aus klimatischen Bedingungen (z.B. längere Dunkelheit im Winterhalbjahr und dadurch höherer Energiebedarf für Licht und Wärme) sowie aus dem Lebens-/Arbeitsrhythmus (geringer Energiebedarf nachts durch geringe menschliche Aktivität). Teilweise sind die Schwankungen aufgrund von Erfahrungswerten und Prognosen planbar. Diese Mittellast wird durch gut regelbare Kraftwerke wie z. B. Öl, GUD etc. zur Verfügung gestellt, wobei aber durch den geregelten Betrieb sich die durchschnittlichen Wirkungsgrade der Kraftwerke deutlich verschlechtern.

Zusammenfassend ist festzustellen, dass durch eine zentrale Regelung versucht wird, der Summe aller kleinen, regionalen Schwankungen zu begegnen. Die Summe der Schwankungen ist jedoch so gross, das als Folge die wenigen genannten Handlungsoptionen bleiben. Es ist somit nicht möglich lokale, relativ kleine Schwankungen in der Energienachfrage bzw. des Angebots mit einer lokalen Zwischenspeicherung auszugleichen, da die resultierenden überregionalen Schwankungen nicht mehr zentral speicherbar sind.

Andere Teile der Netzbelastung sind wie erwähnt nicht oder nur schwer planbar, wie z.B. Schwankungen in der Stromproduktion durch Windkraftwerke z. B. durch Schadensfälle oder Windstille. Für diese nicht planbaren Schwankungen werden so genannte Schattenkraftwerke vorgehalten, die sehr schnell in ihrer Leistung geregelt werden können. Infolge all dieser Unwägbarkeiten arbeiten Kraftwerke heute selten am optimalen Arbeitspunkt für den sie ausgelegt sind, sondern an einem Arbeitspunkt, der dem momentanen Strombedarf entspricht, mit entsprechenden Folgen auf den Wirkungsgrad.

Im industriellen Maschinen- und Anlagenbau ist es heute üblich, die elektrischen Verbraucher nicht direkt an eine primäre Energiequelle anzuschliessen, sondern über einen Zwischenkreis Spannung und Strom bereitzustellen. Der Zwischenkreis hat die Aufgabe die Energieversorgung anzupassen, zu transformieren und zu stabilisieren. Dieser Zwischenkreis soll dann einen überhöhten Energiebedarf ausgleichen. Allerdings muss der Zwischenkreis an die jeweiligen Verbraucher angepasst werden. Werden bspw. in einer Maschine Verbraucher mit unterschiedlichen Netzspannungen betrieben, wird dies entweder durch mehrere Zwischenkreise unterschiedlicher Spannung realisiert (Industrieanwendung) oder durch den Gebrauch von an den Zwischenkreis/Energiequelle angeschlossenen DC/DC-Wandlern (batteriebetriebene Systeme). Als Folge dessen haben sich bestimmte Standardspannungs- bzw. Leistungsklassen entwickelt, z.B. die 600V- oder 48V-Klasse. In vielen Fällen wird allerdings nur ein Motor pro Zwischenkreis eingesetzt.

Die Verbraucher können aus dem Zwischenkreis sowohl Energie entnehmen als auch zurückspeisen. Das Ziel hierbei ist, Energie, die z.B. beim Abbremsen eines Motors frei wird, anderen Verbrauchern, welche ebenfalls an diesen Zwischenkreis angeschlossen sind, zur Verfügung zu stellen und somit Energie zu sparen. Wird zuviel Energie rückgespeist oder steht die Energie zu einem Zeitpunkt zur Verfügung an dem sie nicht oder nur teilweise benötigt wird, wird sie in Bremswiderständen in thermische Energie umgewandelt.

Seit einigen Jahrzehnten ist die vollständige Zwischenspeicherung der regenerativen Energie lokal im Zwischenkreis in Kondensatoren bzw. Batterien bedingt technisch möglich. Darüber hinaus geschieht dies bislang aus ökonomischen Gründen sehr selten. In letzter Zeit werden aus Energiespargründen immer wieder Gleichrichtersysteme angeboten, die in der Lage sind, überschüssige Energie ins Stromnetz zurückzuspeisen anstatt sie über Widerstände abzutakten. Diese Rückspeisungen stellen hohe Anforderungen an das Design der elektrischen Anlage, um die von den Netzbetreibern geforderten Stabilitätskriterien zu erfüllen (sinusförmiger Spannungsverlauf, keine Erzeugung von Spannungsspitzen usw.).

Aus der US 7,042,178 ist ein Energiespeicher in einem Zwischenkreis bekannt, welcher regenerative Energien, welche der Motor beim Bremsen generiert, speichern kann. Überschüssige Energie wird jedoch wieder ins Netz zurück gespeist. Dies geschieht über ein Regeneration-Control-Gerät, welches die Spannung am DC-Link misst und bei Überschreitung der Regeneration-Control-Start-Spannung diese überschüssige Energie zurückspeist. Hier wird also auf den klassischen Zwischenkreis zurückgegriffen. Statt jedoch die regenerative Energie durch Bremswiderstände etc. zu vernichten (wie bspw. nach der US 6,422,351), wird diese in Kondensatoren gespeichert und bei Bedarf wieder an den Verbraucher abgegeben. Zusätzliche überschüssige Energie wird wieder ins Netz zurückgespeist, die aber nachteiliger Weise wieder zu einer Instabilität des Netzes führt. Ferner muss der alternative Verbraucher der überschüssigen Energie in der Nähe bzw. im selben Mittelspannungsnetz sein.

Des weiteren gibt es für Haushalte schon intelligente Stromzähler. Ein derartiges System ist z. B. in der US 7,274,995 beschrieben. Das Ziel derartiger Systeme ist die Optimierung der Nachfrage und Lieferung von Energie bezüglich der Kosten. So ist das System in der Lage mit Verbrauchern und Netzbetreibern zu kommunizieren, um z. B. zeitunabhängige Prozesse wie Wäsche waschen oder das Laden von Energiespeichern zu preisgünstigsten Zeiten durchführen zu können und so die Energiekosten für den Betreiber so gering wie möglich zu halten. Intelligente Stromzähler tragen somit zwar dazu bei, den Energieverbrauch bezüglich der Kosten zu optimieren, jedoch können sie nicht die tatsächlichen Bedarfsspitzen reduzieren. Diese intelligenten Stromzähler lösen somit nicht die Ursache des Problems, sondern behandeln quasi nur die Symptome.

Ein weiterer wesentlicher Nachteil der bisherigen Lösungen ist also, dass überschüssige Energie nicht sinnvoll verwendet und gespeichert werden kann. Die Versorgung ist deshalb meist überdimensioniert um die unregelmässigen Entnahmen mit Spitzenlast zu bewältigen. Im Stromversorgernetz wird überschüssige Energie in ineffektiven Speicherkraftwerken vorgehalten, bei elektrischen Verbrauchern im Zwischenkreis verbrannt oder ins Netz zurückgespeist, wo sie bei fehlenden oder alternativen Verbrauchern ebenfalls verbrannt wird.

### Aufgabe

Aufgabe der vorliegenden Erfindung ist die Schaffung eines Systems zur verbrauchsoptimalen Verteilung und Verwaltung von Energie zur Versorgung eines definierten Systems mit einer begrenzten Anzahl von unterschiedlichen Verbrauchern und Quellen, wobei auf Netzseite eine zeitlich konstante Grundlast wirkt und keine Rückspeisung in das Netz vorgenommen wird.

### Lösung der Aufgabe

Zur Lösung der Aufgabe führt zum einen, dass eine den Energiespeicher umfassende Energieplattform einerseits mit der primären Energiequelle und andererseits mit dem Verbraucher verbunden und anhand des Energiebedarfs des Verbrauchers gesteuert wird.

Dem Verfahren liegt die Erkenntnis aus der statistischen Thermodynamik bzw. aus der Informationstheorie über die Gleichheit von Energie und Information zugrunde.

In den letzten Jahrzehnten hat sich die digitale Verarbeitung von Informationen durchgesetzt und zu einer digitalen Revolution in allen Bereichen des täglichen

Lebens geführt. Davon sind die Bereiche Kommunikation, Unterhaltung, Verwaltung, Handel, Bankwesen, Militär, Logistik bis zur Produktion betroffen. Diese Revolution beruht auf der Speicherung von Information in digitalen Einheiten. Bei diesen digitalen Einheiten handelt es sich um Bits, welche als die kleinstmögliche Informationseinheit und deren Gruppierungen wie z. B. Bytes bekannt sind.

Um die schnelle Kommunikation bzw. das Übermitteln von Information zwischen Beteiligten an einem Prozess zu ermöglichen, haben sich unterschiedliche Techniken etabliert. Hier ist vor allem die Netzwerktechnologie (Internet, Ethernet) zu nennen. Sie ermöglicht es Informationen an zentralen Punkten (Netzwerkknoten, Servern) abzulegen und vielen unterschiedlichen Nutzern gleichzeitig zur Verfügung zu stellen. Neben der hier genannten Verarbeitung von statischen Daten, existiert auch die Möglichkeit kontinuierlich fliessende Datenströme mit Hilfe der Netzwerktechnik zu verarbeiten und zu speichern.

Unterschiedliche Anforderungen an Informationsspeicherung und -verarbeitung erfordern physikalisch unterschiedliche Speichertypen. So eigenen sich z. B. sogenannte RANDOM ACCES MEMORY nicht für die dauerhafte Speicherung von Informationen, da sie "flüchtig" sind. Sie eignen sich aber sehr gut als Zwischenspeicher von Daten, die beispielsweise im Verlauf einer Berechnung immer wieder aufgerufen und verändert werden. Der Vollständigkeit halber werden beispielhaft weitere Speichertypen wie ROMs, Festplatten, EEPROMS, Flash od. dgl. ebenfalls aufgeführt.

Im Laufe der Zeit haben sich neben den unterschiedlichen Speichertypen auch die entsprechenden Speicherstrategien herausgebildet. Diese Strategien liegen den entsprechenden unterschiedlichen Algorithmen zugrunde, die zum Aufbau von Anwendungen und Betriebssystemen genutzt werden.

Das zentrale Element dieser Entwicklung ist der Personalcomputer (PC). Der PC stellt eine Arbeitsplattform zur Verfügung, die unterschiedliche Speicher, wie Speichermedien, Datenschnittstellen und eine zentrale Rechnereinheit physikalisch miteinander verbindet. Ein Betriebssystem übernimmt die Kopplung der einzelnen technischen Geräte auf der logischen Ebene und sorgt mit Hilfe von Treibern für die physikalische Umwandlung der logischen Informationen. Gleichzeitig regelt das Betriebssystem auch das Zusammenwirken, die Rangfolge von unterschiedlichen Prozessen bzw. von Programmen auf dem Rechner. Die Arbeitsplattform PC kann mit diesem Betriebssystem und den Programmen entsprechenden Anforderungen auf die unterschiedlichste Weise verwendet werden, bspw. für Unterhaltung, Datenorganisation, Verwaltung, Programmierung, Wissensmanagement od. dgl..

Die technische Realisierung von informationsverarbeitenden Maschinen beruht auf den Prinzipien der Informationstheorie, die zwei unterscheidbare Zustände als kleinste Einheit der Information begreift, das sogenannte Bit. Die Information 1 oder 0 kann technisch auf vielfache Weise dargestellt werden. So z. B. als An und Aus, Auf und Ab, Hell und Dunkel usw..

Wie schon vielfach in der statistischen Physik gezeigt wurde, so unter anderem am Beispiel des "Maxwell'schen Dämons", ist mit dem Löschen von Informationen stets die Erhöhung der Entropie um mindestens k_{B}In2 verbunden (Landauer-Prinzip). Die Entropie ist hier als ein Mass für die Arbeitsfähigkeit von Energie zu verstehen, d. h., das Löschen von Information führt zu einer Verminderung der Arbeitsfähigkeit von Energie. Daneben kann zudem gezeigt werden, dass die Entropie der Thermodynamik der Informationsentropie entspricht (Benett 1982). Im Rahmen dieser Erkenntnisse kann man davon ausgehen, dass Energie und Information äquivalent sind. Diese Erkenntnis wird ausgenutzt um elektronische Informationsverarbeitung zu ermöglichen. So ist eine DRAM-Zelle beispielsweise als Kondensator ausgeführt, der geladen oder ungeladen ist und somit die Information 1 oder 0 darstellt. Somit beinhaltet der Energieinhalt des Kondensators den Informationsinhalt. Hier weist natürlich das Ziel möglichst wenig Energie pro gespeichertem Bit Informationen zu benötigen. Die theoretisch minimal nötige Energie um einen Bit bei einer bestimmten Temperatur zu speichern ist gegeben durch Eₘᵢₙ = k_{B}Tln2.

Eine völlig neuartige Ausnutzung der Gleichheit von Energie und Information wird in diesem Patent beschrieben. Durch diese neuartige Ausnutzung erhält man eine Vielzahl von Möglichkeiten, Energie auch in grossem Massstab effizient zu verwalten und zu verteilen.

Kernelement der vorliegenden Erfindung ist die Energieplattform. Die primäre Energiequelle, Netz, Generator, Brennstoffzelle usw. ist nicht mehr, wie bislang im Stand der Technik direkt bzw. über einen Zwischenkreis mit dem Verbraucher verbunden, sondern bevorzugt nur noch mit der Energieplattform. Der herkömmliche Zwischenkreis zur Wandlung ist somit nicht mehr nötig.

Der Energiespeicher der erfindungsgemässen Energieplattform besteht aus verschiedenen, dynamisch verschaltbaren Einzelspeicherelementen, welche unterschiedlicher Art sein können (z. B. elektrochemisch, physikalisch, elektromechanisch, etc.). Die Energieplattform ist einerseits direkt mit der primären Energiequelle (Netz, Generator, Batterie) und andererseits mit mindestens einem Verbraucher verbunden, wobei die Plattform über ein sogenanntes Basic-Energy-Input-Output-System (BEIOS) sowie ein Operationssystem "Energy Operating System" (EOS) verfügt. Das BEIOS bildet die Schnittstelle zwischen Energiespeicher und Operationssystem, welches für die dynamische Verschaltung und das Verwalten des Speicherplatzes, gemäss den Anforderungen der Verbraucher und Quellen sorgt. Vom Prinzip her ist diese Speicherverwaltung mit einem Betriebssystem eines PCs vergleichbar. Auch das EOS beinhaltet einen Kern, der die Hardware der Energieplattform verwaltet, sowie grundlegende Systemfunktionen.

Das BEIOS bildet dagegen die Schnittstelle zwischen der physikalischen Energieversorgung und der virtuellen Verwaltung derselben. Somit ist es möglich, mit unterschiedlichen Verwaltungssystemen und Verwaltungsalgorithmen das System zu betreiben.

Ein wichtiges Element der vorliegenden Erfindung ist diese Energieplattform. Die primäre Energiequelle, Netz, Generator, Brennstoffzelle usw., ist nicht mehr, wie bislang im Stand der Technik, mit dem Verbraucher verbunden, sondern bevorzugt nur noch mit der Energieplattform. Selbstverständlich kann die primäre Energiequelle in einer Ausführungsform der Erfindung auch noch zusätzlich mit dem Verbraucher verbunden werden.

Wesentlich bei der vorliegenden Erfindung ist, dass von der primären Energiequelle nicht mehr die Energie die für maximale Leistung des Systems angefordert werden muss, sondern eine Energiemenge, die weit unterhalb dieser maximalen Anforderung liegt. Diese stellt den durchschnittlichen Energieverbrauch des Systems dar. Die Verbrauchsspitzen können somit durch ein intelligentes Energiemanagement mittels gesammelter Energie aus dem Speicher ausgeglichen werden.

Von der primären Energiequelle, z.B. dem öffentlichen Netz, wird dann nur noch dieser durchschnittliche Energieverbrauch angefordert, wobei der Anschluss exakt auf diesen Bedarf ausgelegt sein kann. Selbstverständlich kann dieser durchschnittliche Energieverbrauch über gewisse zeitliche Perioden hinweg schwanken. Über den Tag hinweg gesehen, ist der durchschnittliche Verbrauch bspw. einer Maschine, die im Zweischichtbetrieb läuft, während dieser Zeit hoch, während der Verbrauch bei Nichtbetrieb gleich null ist. Hier muss bspw. nur eine Grundversorgung für bspw. einen integrierten Zeitmesser aufrechterhalten werden. Gleiches gilt bspw. auch für Arbeitstage, im Gegensatz zu Sonn- und Feiertagen. Ähnliches gilt auch für Arbeitsmonate im Gegensatz zu Urlaubsmonaten. Diese Aufzählung könnte beliebig weiter fortgeführt werden.

Ein grosser Vorteil der vorliegenden Erfindung ist es, von der primären Energiequelle, insbesondere dem öffentlichen Netz, nur die Energie abzufordern, welche von dem einen oder einer Mehrzahl von Verbrauchern im Durchschnitt über eine bestimmte Zeitperiode hin benötigt wird. Schwankungen des Energieverbrauchs werden intern von dem intelligenten Energiemanagementsystem EOS und BEIOS aus dem Energiespeicher ausgeglichen. Dies hat natürlich auch enorme Auswirkungen auf die Anforderung an den öffentlichen Netzwerkbetreiber, der nun wiederum seinerseits die Energieversorgung wesentlich besser regeln und vorausschauender planen kann.

Wichtiger Teil des erfindungsgemässen Energiemanagements ist somit die Steuerung des Energieflusses. Im Gegensatz zu den heutigen Systemen, verläuft dieser nicht mehr vom Netz zum Verbraucher, sondern erfindungsgemäss vom Netz über die Energieplattform zum Verbraucher. Gerade bei industriellen Prozessen ist der Ablauf sowie der Energiebedarf bekannt. Viele Prozesse laufen zudem zyklisch ab. Es ist somit möglich, einer Anwendung die benötigte Energiemenge von vornherein zur Verfügung zu stellen, vergleichbar mit dem zur Verfügung stellen eines benötigen Arbeitsspeichers eines Betriebssystems für ein Programm. Gleichzeitig kann das erfindungsgemässe Energiemanagement auch die Aktionen planen und die entsprechenden Energiemengen in der gewünschten Form bereitstellen sowie evtl. regenerierte Energien aus Verbrauchern sowie nicht planbare Energie aus sekundären z. B. regenerativen Energiequellen wieder zwischenspeichern. Das Managementsystem (EOS) übernimmt die dynamische Speicherverwaltung. Diese geschieht bedarfgerecht, leistungs- und energieoptimal.

Vor allem wird erfindungsgemäss der oder die Verbraucher genauestens beobachtet. Es wird erkannt, wenn ein Verbraucher weniger Energie benötigt. In diesem Fall kann anderen Verbrauchern mehr Energie zur Verfügung gestellt werden. Es wird ferner auch erkannt, dass bestimmte Verbraucher besonders bevorzugt werden müssen, so dass andere Verbraucher mit weniger Energie oder zu anderer Zeit mit Energie versorgt werden. Das heisst, es findet eine intensive Kommunikation zwischen der Energieplattform und der Steuereinheit und dem Verbraucher und der Steuereinheit statt.

Ziel dieser erfindungsgemässen Energieplattform ist es, eine einheitliche Basis für die Energieversorgung von Verbrauchern (Geräten/Maschinen) zur Verfügung zu stellen, die folgende Eigenschaften besitzen soll:
- Keine "Vernichtung" von überschüssiger Energie
- Reduzierung des Energieverbrauchs auf die tatsächlich benötigte Menge (Energie = zu verrichtende Arbeit + Wirkungsgradverluste), im Idealfall, Wegfall von Verlusten
- Auslegung von Energieversorgung und entsprechender Infrastruktur nicht mehr auf die Spitzenlasten, sondern auf den durchschnittlichen Verbrauch. Spitzenlasten werden durch den Energiespeicher abgefangen
- Vorhersagbarkeit des Energiebedarfs einzelner Maschinen
- Konstante Belastung des Stromnetzes, keine Schwankungen und kein Rückspeisen ins Netz, sondern Eigennutzung von überschüssiger oder regenerativer oder rekupierter Energie
- Ermöglichung unterschiedlichster Spannungsniveaus bzw. Leistungsniveaus entsprechend der Verbraucher/der Anwendungen an einer zentralen Stromversorgung
- Ermöglichung der Kommunikation von einzelnen Anwendungen untereinander
- Galvanische Trennung von Stromquelle (Netz) und Verbraucher (Schutzfunktion)

Bevorzugt soll der Energiespeicher der Energieplattform matrizenartig aus verschiedenen Speicherelementen aufgebaut und dynamisch verschaltbar sein. Er besteht aus mehreren Ebenen. Eine zentrale Ebene besteht aus kleinen Speicherelementen/Zellen wie bspw. Kondensatoren mit einer festgelegten Speicherkapazität bzw. Arbeitsspannung. Diese Kapazität entspricht in übertragenem Sinne einem energetischem Bit.

Aufgabe der Speicherelemente ist, die benötigte Energiemenge für die jeweiligen Verbraucher physikalisch zur Verfügung zu stellen. Diese Einzelspeicherelemente werden zu gleichwertigen Bausteinen zusammengefasst. Diese Bausteine sind ebenfalls dynamisch verschaltbar und können somit unterschiedlichen Bedarfsszenarien angepasst werden, so z.B. spannungsgeführt oder stromgeführt.

Diese Elemente werden nicht, wie heute üblich, statisch miteinander verschaltet, stattdessen können einzelne Zellen dynamisch in Reihe oder parallel verschaltet werden. Dieses dynamische Verschalten ermöglicht es, eine bestimmte Energiemenge/Leistung in der für die nächste Wandlung besten Weise bereit zu stellen. Für Anwendungen mit hohem Strombedarf erfordert dies eine Parallelschaltung von Speicherelementen und für Anwendungen mit einem hohen Spannungsbedarf eine Serienschaltung.

Die Ebene der Speicherelemente wird von zwei Seiten kontaktiert. Eine Seite ist für das Laden, die andere für das Entladen der Speicherelemente zuständig. Somit ist es möglich, gleichzeitig einzelne Speicherelemente einer Ebene zu beladen und zu entladen. Die übergeordneten Ebenen auf Lade- bzw. Entladeseite sind für eine dynamische Verschaltung von einzelnen Speichermatrizen (Bausteinen) zuständig.

Dieser dynamische Energiespeicher ist modular aufgebaut und kann unterschiedliche Speichertypen/Speicherbausteine miteinander kombinieren. Es ist also möglich, verschiedene Speichertypen mit ihren jeweiligen Stärken und Schwächen zu kombinieren. So können z. B. Kondensatoren, Batterien, Schwungmassenspeicher etc. zum Einsatz kommen. Diese Aufzählung sei jedoch nicht abschliessend, da jedwede Form der physikalischen, elektronischen, chemischen, thermischen oder elektromechanischen Speicherung denkbar ist. Das Betriebssystem der Plattform kann Daten, wie aktuelle Verschaltung, Füllstand, Monitoring des Speichers usw. abrufen und verwalten. Somit ist es möglich, kurzfristig höhere Leistungen zur Verfügung zu stellen, als überhaupt vom Netz geliefert werden kann.

Weiterhin ist das Energiemanagement in der Lage, regenerative Energien zu verwerten (z.B. Solarpanel oder bremsender Motor) und in den Speicher einzufüllen. Dabei verschaltet das Management die Speicherelemente nach Bedarf. So können z.B. mehrere Speicherzellen in einer Submatrix/Baustein verschaltet werden, um einen gewissen Strombedarf auf einem gewissen Spannungspegel zur Verfügung zu stellen. Gleichzeitig ist es möglich, dass eine einzelne Zelle geladen wird. Diese beiden oder mehrere ähnliche Prozesse können gleichzeitig ablaufen.

Weiterhin ist das Managementsystem in der Lage, alle diese Lade-/Entlade/Speicher-Prozesse gleichzeitig zu überwachen. Die Überwachung dient dazu, um die Lade- und Entladevorgänge zu koordinieren und ausserdem wird sicher gestellt, dass genügend Energie für alle Aufgaben zur Verfügung steht.

Vorteilhaft ist, wenn die Verbraucher und Quellen des Systems über eine gewisse Intelligenz verfügen. Handelt es sich bei dem Verbraucher bspw. um einen Motor, gibt dieser bei seiner Einschaltung in ein entsprechendes System seine Energie und seinen Leistungsbedarf und die Daten seines jetzt integrierten Wechselrichters an das Managementsystem (EOS) weiter, der Speicher und das Managementsystem stellen nur noch die benötigte Spannungsebene und die benötige Energiemenge zur Verfügung (Plug and Play System). Das Managementsystem (EOS) übernimmt die Kommissionierung der einzelnen Aufgaben.

Weitere Vorteile dieses erfindungsgemässen intelligenten Energiemanagementsystems sind:
- hohe Energieeffizienz, da jede Energiewandlung im idealen Betriebspunkt der jeweiligen DC/DC, AC/DC und DC/AC - Wandlung betrieben werden kann
- keine festen Spannungsniveaus mehr und damit kein Zwang zu Standardverbraucher (Antriebsmotor, Zange; etc....). Jeder Verbraucher kann genau auf seine Anwendung massgeschneidert werden. Technisch ist dies heute schon möglich, nur technisch/ökonomisch nicht sinnvoll, da der Verdrahtungs-, Steuerungs- und Regelungsaufwand zu gross ist. Aus dieser Standardisierung resultieren häufig auch überdimensionierte Motoren welche in einem schlechten Wirkungsgrad betrieben werden aufgrund des reduzierten Aufwandes
- Möglichkeit, einen weltweiten Standard in der Energieverwaltung zu setzen und zu entwerfen
- Systeminherente unterbrechungsfreie Stromversorgung

Das Energiemanagement kann weiterhin auf spezielle bekannte Prozesse voroptimiert werden, z.B. Bewegungsprofile in industriellen Arbeitssträngen. Daneben kann es aber auch selbstlernend und selbstoptimierend eingesetzt werden. In diesem Fall wird z. B. auf einen Hiddenmarkov Process oder auf KAHMANN-Filter oder jeglicher Art von künstlichen neuronalen Netzen zurückgegriffen.

Diese selbstlernende Maßnahmen können bei einer Nutzung des Energiemanagementsystems bei schlecht optimierbaren Anwendungen wie z. B. der Energieversorgung von Einfamilienhäusern zum Einsatz kommen.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 ein Diagramm des Verlaufs eines Energieverbrauchs eines Verbrauchers;
Figur 2 eine blockschaltbildliche Darstellung des erfindungsgemässen Systems zum Versorgen von zumindest einem Verbraucher mit Energie aus einem Energiespeicher;
Figur 3 eine blockschaltbildliche Darstellung eines möglichen Hardwareaufbaus für das System gemäss Figur 2;
Figur 4 eine schematische Darstellung eines strukturellen Aufbaus eines Energiespeichers;
Figur 5 eine diagrammartige Darstellung eines Energie-/Leistunsprofils;
Figur 6 eine graphische Darstellung des Arbeitsschrittes "Vorladen/Booten";
Figuren 7a bis 7e graphische Darstellungen von verschiedene Lade- und Arbeitssequenzen;
Figuren 8a bis 8d graphische Darstellungen von Verschaltungen innerhalb eines Energiespeichers bei verschiedenen Arbeitsschritten.

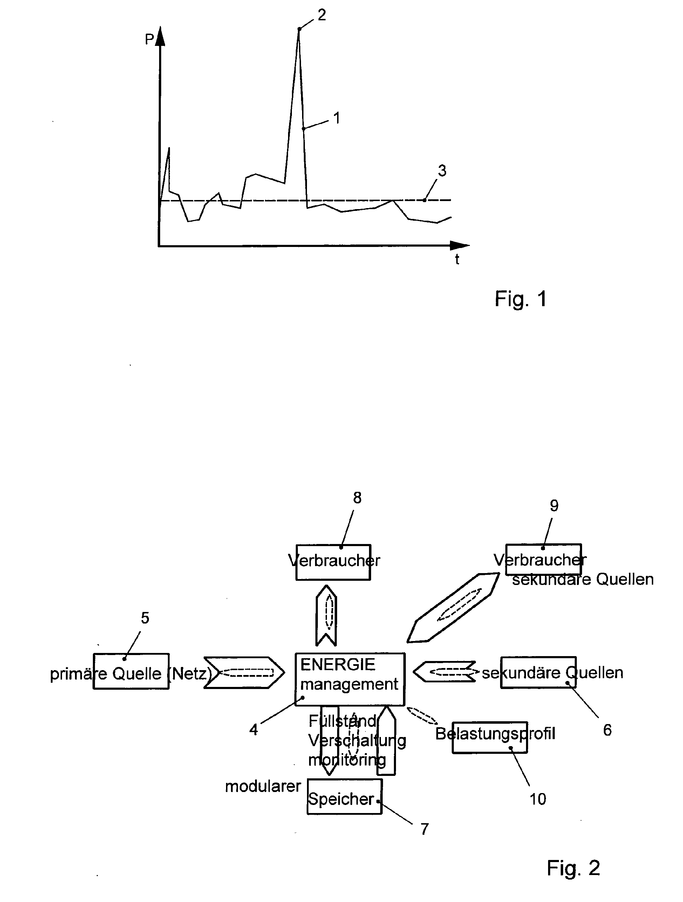

In Figur 1 ist in einer Kurve 1 der momentane Energieverbrauch eines nicht näher gezeigten Verbrauchers dargestellt. Dabei ist auch durch einen Peak 2 eine maximal benötigte Leistung erkennbar, auf die nach dem Stand der Technik eine Energieversorgung ausgelegt ist. Dagegen liegt ein gestrichelt dargestellter durchschnittlicher Verbrauch 3 verständlicherweise weit unter dem Peak 2.

Aufgabe der vorliegenden Erfindung ist es, die externe Energieversorgung in etwa diesen Bereich des durchschnittlichen Verbrauchs zu bringen und die internen Peaks durch den Verbraucher mittels einer Steuereinheit = Intelligentes Energiemanagement zu managen. Hierzu ist gemäss Figur 2 eine Steuereinheit 4 vorgesehen. Diese steht in kommunikativer Verbindung mit einer primären Energiequelle 5, üblicherweise dem öffentlichen Netz, mit sekundären Energiequellen 6, beispielsweise innerbetrieblichen Zusatzenergiequellen, wie Batterien od. dgl., mit einem Energiespeicher 7 als Teile einer Energieplattform 19, die ein zentraler Bestandteil des erfindungsgemässen Systems ist, und zwei unterschiedlichen Verbrauchern 8 und 9, wobei der Verbraucher 8 ein reiner Verbraucher ist, während der Verbraucher 9 auch eine sekundäre Quelle für Energie darstellen kann, indem beispielsweise Bremsenergie eines Motors ausgenutzt und rückgespeist werden kann. Zusätzlich steht die Steuereinheit 4 noch mit einer Quelle 10 für Belastungsprofile in Verbindung, in der entsprechende vorgegebene Belastungsprofile gespeichert sind.

Die grossen Pfeile in Figur 2 stellen die Richtung der Energie, die kleineren die Richtung der Informationen dar. Dabei ist erkennbar, dass Energie anhand einer Information aus der Steuereinheit 4 von der primären Energiequelle 5 direkt in den Speicher 7 eingegeben wird. Zwischen der Steuereinheit 4 und dem Speicher 7 besteht eine bidirektionale Informationsstruktur, wobei die Steuereinheit 4 vor allem dem Speicher 7 mitteilen kann, Energie zu den Verbrauchern 8 und 9 zu liefern. Mit diesen steht sie ebenfalls in bidirektionaler Informationsverbindung, so dass sie genau weiss, wie viel Energie die Verbraucher 8 und 9 benötigen. Die vom Verbraucher 9 zurückzuspeisende Energie wird aufgrund von Befehlen der Steuereinheit 4 wieder in den Speicher 7 eingeleitet.

Mit den sekundären Energiequellen 6 steht die Steuereinheit 4 ebenfalls in bidirektionaler Informationsverbindung, d.h., die sekundären Quellen 6 können der Steuereinheit 4 mitteilen, wenn sekundäre Energie vorhanden ist. Diese Energie kann dann von der Steuereinheit 4 abgerufen und dem Speicher 7 zugeführt werden.

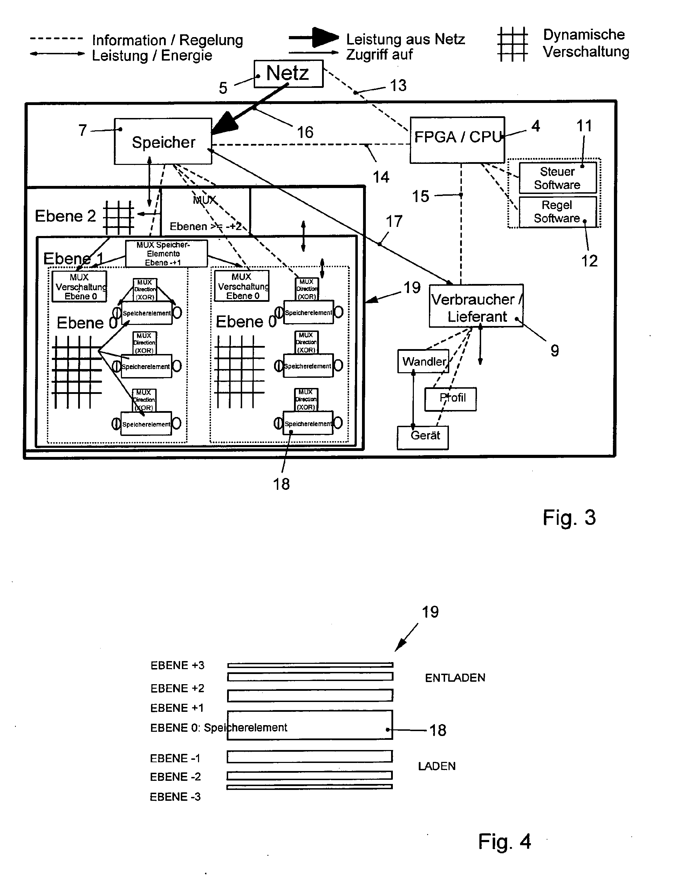

In Figur 3 ist ein möglicher Aufbau einer entsprechenden Hardware für das erfindungsgemässe System aufgezeigt. Die beiden Kernelemente sind zum einen der Speicher 7 und zum anderen die Steuereinheit 4. Die Steuereinheit 4 besteht aus einem Rechner wie PC, Microcontroller od. dgl.. Mit dieser Steuereinheit 4 wird die gesamte Energie verwaltet. Aus diesem Grunde enthält die Steuereinheit 4 eine Steuersoftware 11 und eine Regelsoftware 12. Kommunikativ in Verbindung steht die Steuereinheit 4 über einen entsprechenden Informationsaustausch 13 mit dem Netz, wobei dieser nur unidirektional zwischen Steuereinheit 4 und Netz 5 ist. Es genügt, wenn die Steuereinheit 4 die Versorgung des Netzes (primäre Energiequelle) 5 für den Speicher 7 sicherstellt. Ein weiterer Informationsaustausch 14 geschieht zwischen Speicher 7 und Steuereinheit 4 und ein weiterer Informationsaustausch 15 zwischen dem Verbraucher 9 und der Steuereinheit 4. Eine Energieversorgung 16 geschieht, wie oben erwähnt, zwischen Netz und Speicher, ferner eine bidirektionale Energieversorgung 17 zwischen Verbraucher 9 und Speicher 7.

Kernelement des erfindungsgemässen Systems ist ein matrizenartig aufgebauter, dynamisch verschaltbarer Energiespeicher. Der Speicher zeichnet sich dadurch aus, dass er aus mehreren Ebenen gemäss Figur 4 besteht. Die zentrale Ebene 0 besteht aus kleinen Speicherelementen/-zellen, wie z.B. Kondensatoren mit einer festgelegten Speicherkapazität bzw. Arbeitsspannung. Diese Elemente werden jedoch nicht, wie heute üblich statisch miteinander verschaltet, stattdessen können die einzelnen Zellen dynamisch in Reihe oder parallel verschaltet werden. Dieses dynamische Verschalten ermöglicht es, eine bestimmte Energiemenge/-leistung in der für die nächste Wandlung besten Weise bereit zu stellen, d.h., für Anwendungen mit hohem Strombedarf wird also die Parallelschaltung von Speicherelementen bzw. für Anwendungen mit einem hohen Spannungsbedarf eine Serienschaltung gewählt.

Die Ebene der Speicherelemente 18 wird weiterhin von zwei Seiten kontaktiert. Eine Seite ist für die Ladung der Speicherelemente zuständig. Sie kann in einer Speichermatrix bestehend aus N-Speicherzellen auf x-Speicherelemente zugreifen und diese verschalten. Die andere Seite ist für die Entladung zuständig und kann dementsprechend auf (N-x) Speicherelemente zugreifen. Somit ist es möglich, gleichzeitig einzelne Speicherelemente einer Ebene zu beladen und zu entladen. Die übergeordneten Ebenen auf Lade- bzw. Entladeseite sind für eine dynamische Verschaltung von einzelnen Bausteinen zuständig.

Der dynamische Energiespeicher 19 (siehe Figur 3) ist somit modular aufgebaut und kann unterschiedliche Speichertypen miteinander kombinieren. Er ist mit der Hardware eines Computers zu vergleichen und stellt die physikalischen Resourcen zum Betrieb zu Verfügung. Weiterhin ist der Speicher mit einem Betriebssystem ausgestattet, welches Daten, wie aktuelle Verschaltung, Füllstand, Monitoring des Speichers verwaltet. Weiterhin kann aus dem Speicher gleichzeitig Energie entnommen, sowie eingelagert werden.

Die Funktionsweise der vorliegenden Erfindung ist folgende:

Ein Produktionsbetrieb, der mit einer Vielzahl von Produktionsmaschinen ausgestattet ist, wird mit dem erfindungsgemässen intelligenten Energiemanagement betrieben. Die Steuereinheit 4 erfasst von dem Energiespeicher 7 dessen Beladung. Ferner erfasst die Steuereinheit 4 den durchschnittlichen Energiebedarf der Verbraucher 8, 9 und ermittelt daraus die Menge an Energie, die über eine bestimmte Zeitperiode aus dem Netz 5 in den Speicher 7 eingegeben werden muss. Sollte jedoch nur diese durchschnittliche Energiemenge im Speicher 7 vorhanden sein, wird die Steuereinheit 4 eine der Energiequellen 5, 6 oder 9 dazu veranlassen, den Speicher 7 soweit aufzufüllen, dass auch Energiespitzen 2 abgefangen werden können. Diese Kommunikation und Regelung zwischen Verbrauchern 8, 9, Speicher 7 und Energiequelle 5, 6 erfolgt fortlaufend.

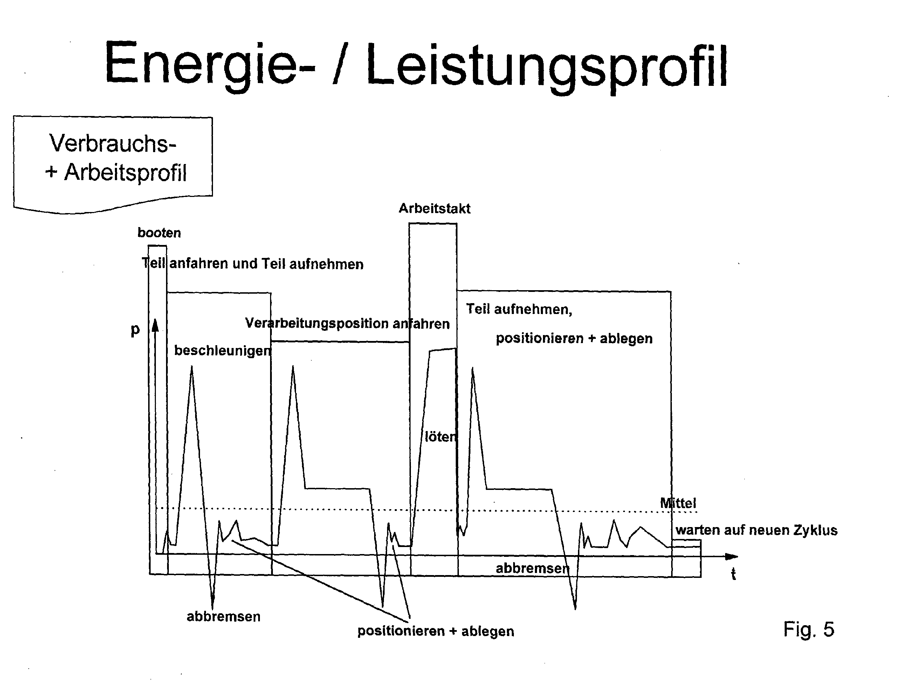

In Figur 5 ist ein Energie-/Leistungsprofil bzw. Verbrauchs- und Arbeitsprofil graphisch dargestellt. Dabei soll ein beliebiges Teil durch den Arbeitstakt "Löten" behandelt werden. In einem ersten Schritt erfolgt ein Booten des Systems. Hier ist nur eine geringe Aufnahme von Energie notwendig, bis die Arbeitsfähigkeit des Systems sichergestellt ist, d. h., es ist genügend Energie vorhanden, um einen Produktionszyklus durchzuführen. Ist dieser Schritt beendet wird das zu behandelnde Teil angefahren, was zu einem Beschleunigungsvorgang führt. Dieser benötigt erhebliche Energie, weit über dem Mittelwert, so dass die Energiereserve über dem von der primären Energiequelle gehaltenen Mittelwert benutzt werden muss. Der Arbeitsschritt "Teil anfahren" beinhaltet aber auch gleichzeitig einen Abbremsvorgang, wobei die dabei frei werdende Energie recouperiert und dem Energiespeicher zugeführt wird.

Da das Teil nicht sofort direkt getroffen wird, muss beispielsweise der entsprechende Roboter gegenüber dem Teil positioniert werden. Dies benötigt nur Energie im Bereich des Mittelwertes, ebenso der Arbeitsschritt "Teil aufnehmen".

Als nächstes muss die Verarbeitungsposition angefahren werden, was wiederum eine Beschleunigung und damit Energieverbrauch weit über dem Mittelwert bedeutet. Mit der Beschleunigung ist auch ein Abbremsvorgang und wiederum ein Positionier- und Ablegevorgang verbunden. Letzterer erfolgt unterhalb des gehaltenen Mittelwertes.

Der Arbeitstakt, d.h., das Löten, erfordert wiederum erhebliche Energie über dem Mittelwert. Danach muss das Teil wieder aufgenommen und zu einer weiteren Position transportiert werden. Dies bedeutet wiederum einen Beschleunigungsvorgang mit erhöhter Energieaufnahme und einen Abbremsvorgang ähnlich dem Vorgang "Verarbeitungsposition anfahren".

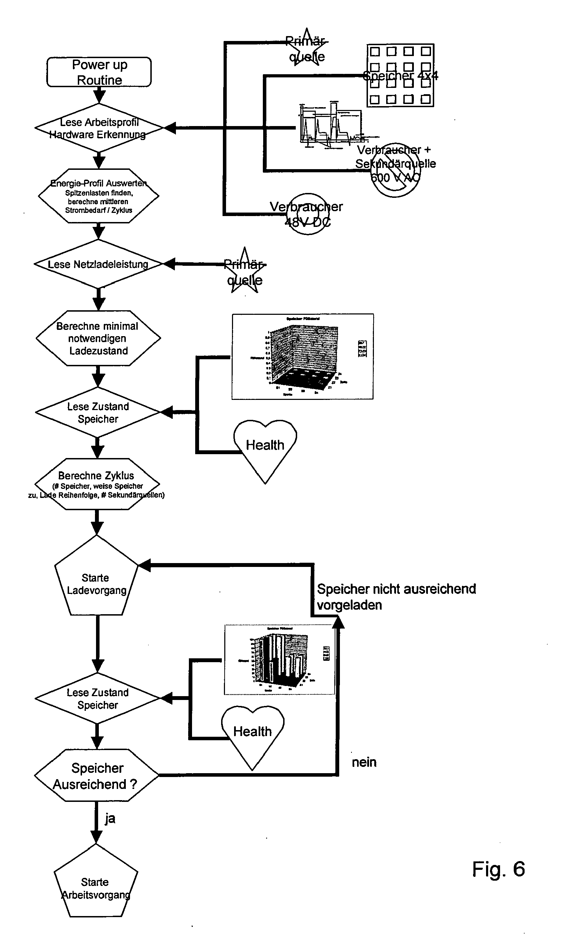

In der Figur 6 ist ein Algorithmus für das Booten der Energieplattform graphisch dargestellt. Der Algorithmus verläuft in den Schritten
- Verbrauchs- bzw. Arbeitsprofil laden
- Energieprofil auswerten, mittleren Bedarf berechnen
- Energiespeicher vorladen bis Betrieb sichergestellt ist
- Starten

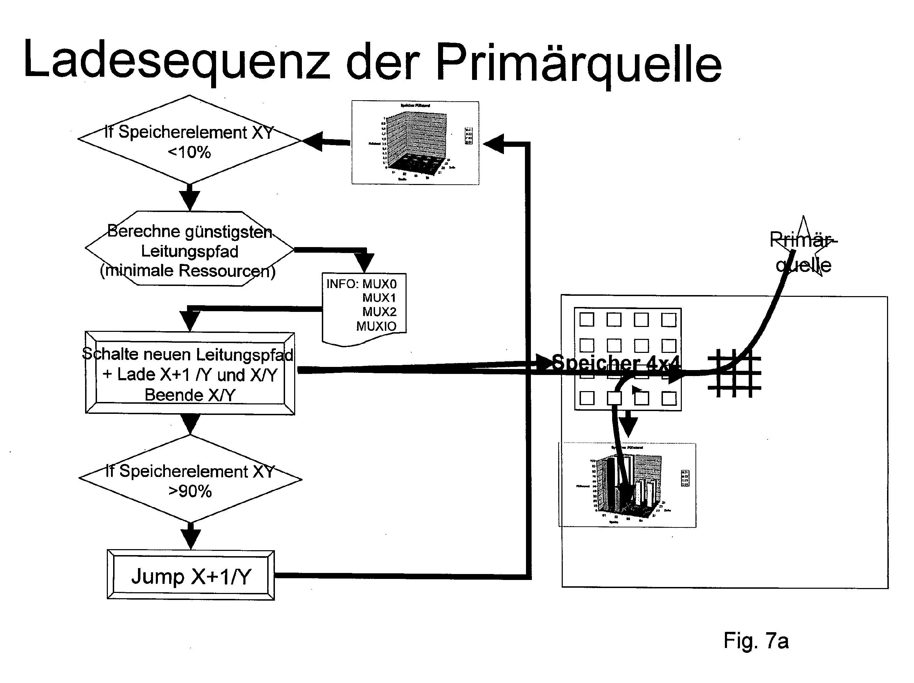

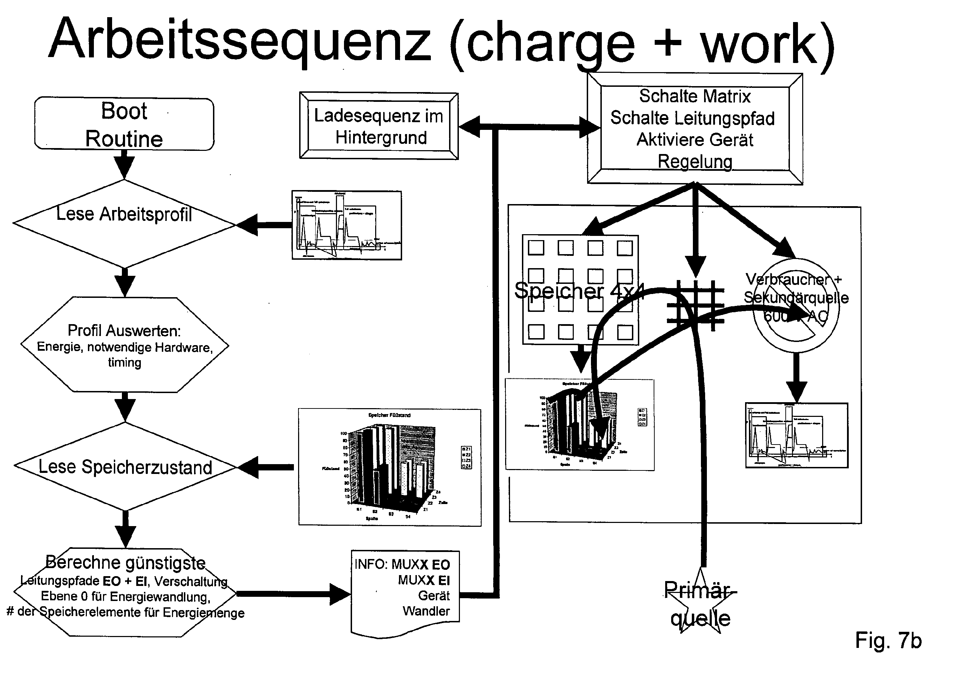

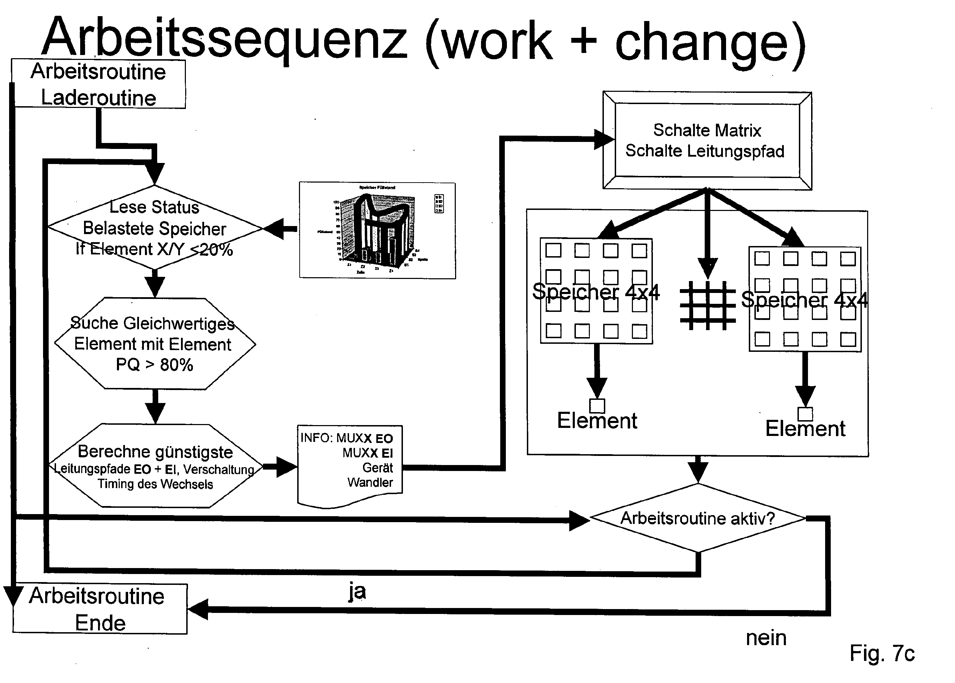

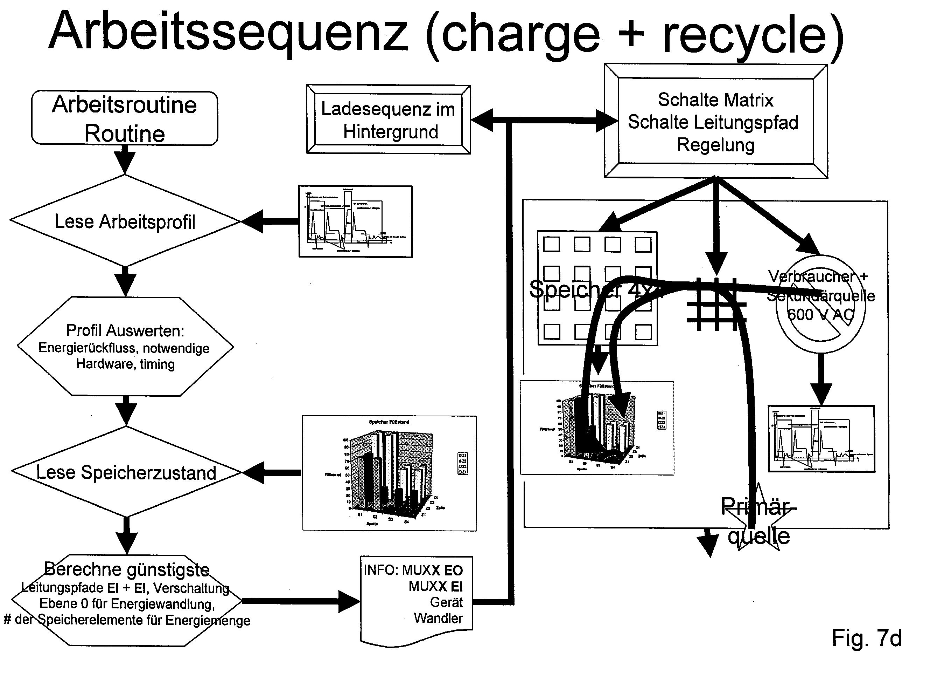

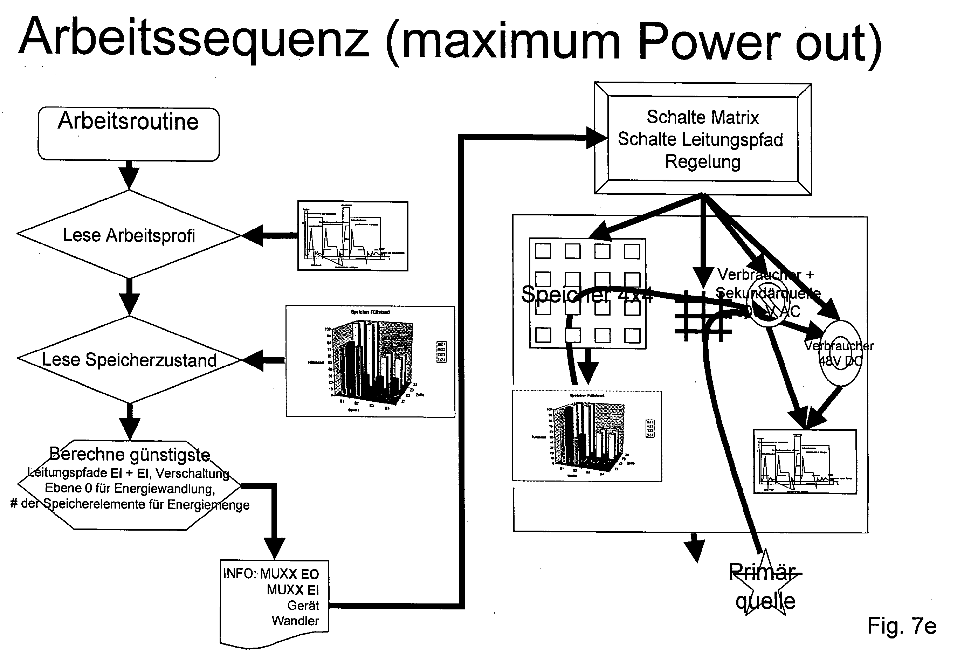

In den Figuren 7a bis 7e sind verschiedene Lade- und Arbeitssequenzen graphisch dargestellt. Die einzelnen Verläufe können den Figuren direkt entnommen werden.

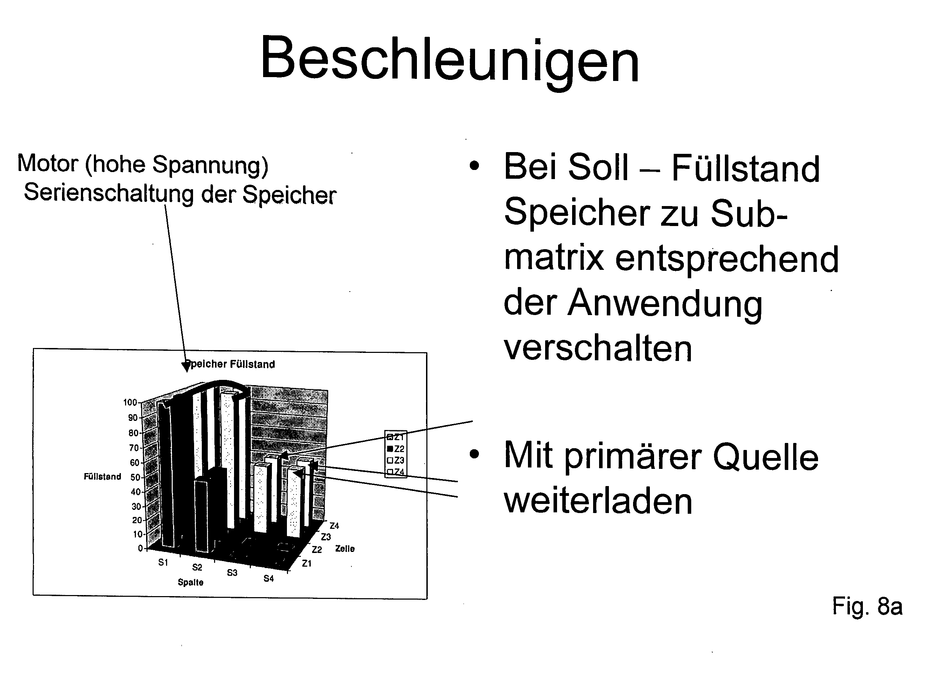

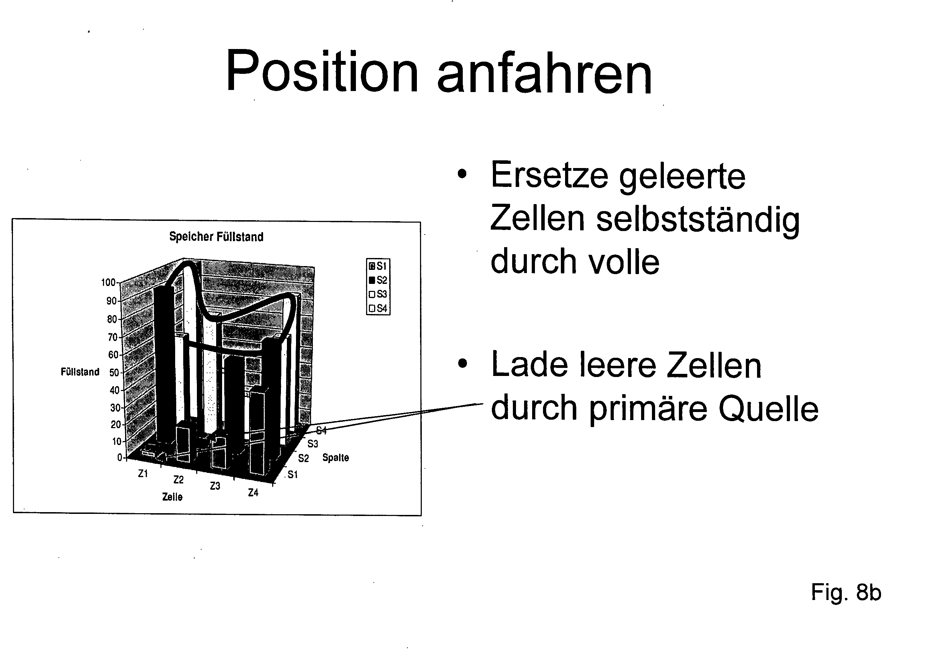

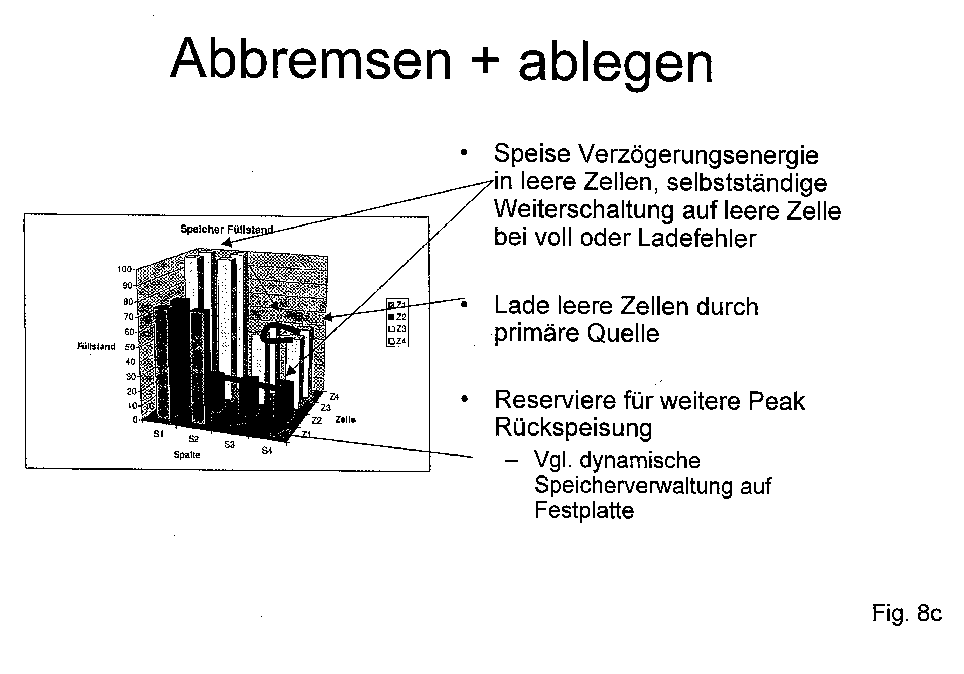

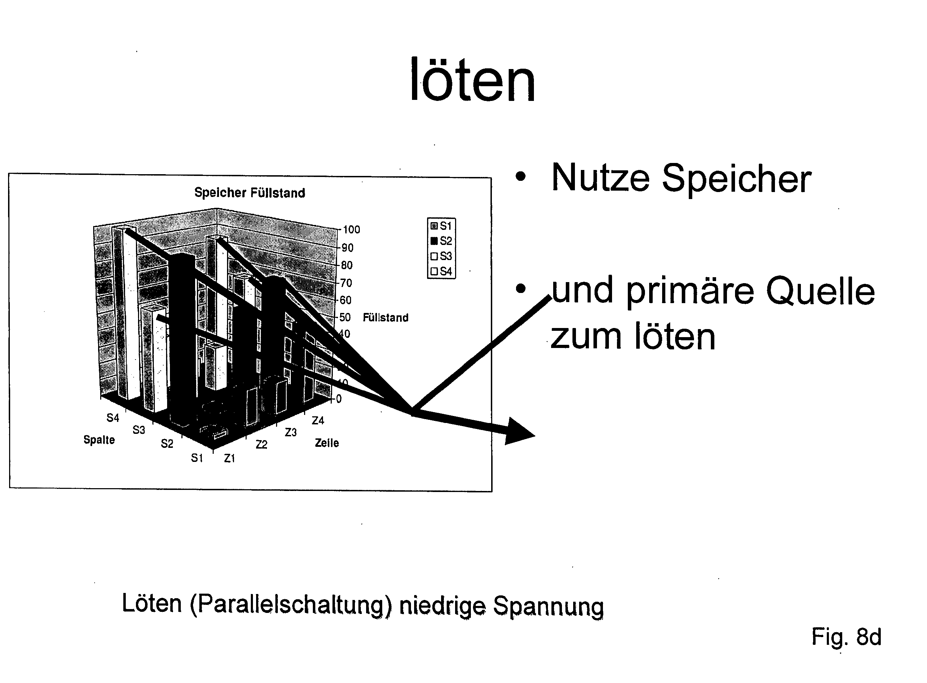

In den Figuren 8a bis 8d sind die einzelnen Speicherelemente in dem Energiespeicher und ihre Verschaltung beim Beschleunigen, Position anfahren, Abbremsen + Ablegen und Löten gezeigt. Beim Beschleunigen ist erkennbar, dass vor allem die vollen Speicherelemente genutzt werden. Beim Arbeitsschritt "Position anfahren", bei dem weniger Energie benötigt wird, können unterschiedlich aufgeladene Speicherelemente miteinander verschaltet werden. Beim Arbeitsschritt "Abbremsen und Ablegen" wird im wesentlichen Energie zurückgeführt, das Ablegen selbst benötigt nur geringe Energie, so dass auch weniger aufgeladene Speicherelemente genutzt werden können.

Beim eigentlichen Arbeitsschritt, dem Löten, werden dann vor allem die gut gefüllten Speicherelemente angezapft.

**Bezugszeichenliste**

| | | | | | |
|---|---|---|---|---|---|
| 1 | Energieverbrauch | 34 | | 67 | |
| 2 | Peak | 35 | | 68 | |
| 3 | durchschnittlicher Verbrauch | 36 | | 69 | |
| 4 | Steuereinheit | 37 | | 70 | |
| 5 | primäre Energiequelle | 38 | | 71 | |
| 6 | sekundäre Energiequelle | 39 | | 72 | |
| 7 | Energiespeicher | 40 | | 73 | |
| 8 | Verbraucher | 41 | | 74 | |
| 9 | Verbraucher | 42 | | 75 | |
| 10 | Belastungsprofil | 43 | | 76 | |
| 11 | Steuersoftware | 44 | | 77 | |
| 12 | Regelsoftware | 45 | | 78 | |
| 13 | Infoaustausch | 46 | | 79 | |
| 14 | Infoaustausch | 47 | | | |
| 15 | Infoaustausch | 48 | | | |
| 16 | Energieversorgung | 49 | | | |
| 17 | Energieversorgung | 50 | | | |
| 18 | Speicherelemente | 51 | | | |
| 19 | dynamischer Energiespeicher / Energieplattform | 52 | | | |
| 20 | | 53 | | | |
| 21 | | 54 | | P | System |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Betreiben von elektrischen und/oder elektromechanischen Systemen mit zumindest einem Verbraucher (8, 9) durch Energie aus einem Energiespeicher (7), der zumindest teilweise von einer primären Energiequelle (5) mit Energie versorgt wird,
**dadurch gekennzeichnet,**
**dass** eine den Energiespeicher (7) umfassende Energieplattform einerseits mit der primären Energiequelle (5) und andererseits mit dem Verbraucher (8, 9) verbunden und anhand des Energiebedarfs des Verbrauchers (8, 9) gesteuert wird.

2. Verfahren nach Anspruch 1, **dadurch gekennzeichnet, dass** die Energieplattform über ein Basic-Energy-Input-Output-System (BEIOS) mit einem Operationssystem (Energy-Operating-System) in Verbindung steht, welches für die dynamische Verschaltung und Verwalten des Energiespeichers gemäss den Anforderungen der Verbraucher und Energiequellen sorgt.

3. Verfahren nach Anspruch 1 oder 2, **dadurch gekennzeichnet, dass** Energie von der primären Energiequelle (5) über zumindest eine vorgegebene zeitliche Periode in konstanter Höhe dem Energiespeicher (7) zugeführt wird, wobei ein durchschnittlicher Energieverbrauch des zumindest einen Verbrauchers (8, 9) gegebenenfalls über eine vorgegebene zeitliche Periode ermittelt und aus der primären Energiequelle (5) dem Energiespeicher (7) zugeführt wird.

4. Verfahren nach wenigstens einem der Ansprüche 1 bis 3, **dadurch gekennzeichnet, dass** dem Energiespeicher (7) von sekundären Energiequellen (6) Energie zugeführt wird, die z. B. vom Verbraucher (9) stammt.

5. Verfahren nach wenigstens einem der Ansprüche 1 bis 4, **dadurch gekennzeichnet, dass** Zufuhr und Entnahme von Energie zu und aus dem Energiespeicher (7) von einer Steuereinheit (4) gesteuert wird, wobei die Steuerung bedarfsgerecht, leistungs- und energieoptimal durchgeführt wird.

6. Verfahren nach wenigstens einem der vorangehenden Ansprüche, **dadurch gekennzeichnet, dass** Betriebszeiten von dem zumindest einen Verbraucher (8, 9) entsprechend der verfügbaren Energie gesteuert werden.

7. Verfahren nach wenigstens einem der vorangehenden Ansprüche, **dadurch gekennzeichnet, dass** je nach Bedarf dem Verbraucher (8, 9) Gleichstrom oder Wechselstrom aus dem Energiespeicher (7) zur Verfügung gestellt wird.

8. Verfahren nach wenigstens einem der vorangehenden Ansprüche, **dadurch gekennzeichnet, dass** mehr als ein Verbraucher (8, 9) von dem Energiespeicher (7) mit Energie versorgt wird, wobei

9. Verfahren nach Anspruch 8, **dadurch gekennzeichnet, dass** unabhängig von der Art oder der primären Energiequelle (5) unterschiedliche Spannungsniveaus für verschiedene Verbraucher (8, 9) zur Verfügung gestellt werden.

10. Verfahren nach Anspruch 8 oder 9, **dadurch gekennzeichnet, dass** ein Informationsaustausch zwischen Energiequellen (5, 6) und/oder Verbrauchern (8, 9) und/oder der Steuereinheit (4) stattfindet, wobei im Bedarfsfall eine Priorisierung der Energieversorgung der Verbraucher (8, 9) durchgeführt wird.

11. Elektrisches und/oder elektromechanisches System zum Versorgen von zumindest einem Verbraucher (8, 9) mit Energie einer primären Energiequelle (5) aus einem Energiespeicher (7), **dadurch gekennzeichnet, dass** der Energiespeicher (7) einerseits mit dem zumindest einen Verbraucher (8, 9) und andererseits mit der primären Energiequelle (5) in Verbindung steht, wobei dem Energiespeicher (7/19) eine Steuereinheit (4) zugeordnet ist.

12. System nach Anspruch 11, **dadurch gekennzeichnet, dass** der Energiespeicher (7/19) modular aufgebaut und dynamisch verschaltbar ist und/oder aus einer Mehrzahl von Ebenen besteht.

13. System nach Anspruch 11 oder 12, **dadurch gekennzeichnet, dass** der Energiespeicher (7/19) aus einer Mehrzahl von gleichartigen Zellen einer bestimmten Betriebsspannung zusammengesetzt ist, die dynamisch in Reihe und/oder parallel verschaltet sind.

14. Energiespeicher zur Speicherung von Energie für ein elektrisches und/oder elektromechanisches System zum Versorgen von zumindest einem Verbraucher (8, 9) mit Energie zumindest einer primären Energiequelle (5), **dadurch gekennzeichnet, dass** mehreren Speicherzellen gleicher oder unterschiedlicher Art, insbesondere elektromechanisch, elektrochemisch induktiv oder kapazitiv, zusammengesetzt sind, welche dynamisch verschaltet sind, um bedarfsgerecht unterschiedliche Stromstärken und Spannungsniveaus einem oder mehreren Verbrauchern (8, 9) zur Verfügung zu stellen.

15. Energiespeicher nach Anspruch 14, **dadurch gekennzeichnet, dass** der Speicher aus mehreren Ebenen von Speichereinheiten, welche aus einer oder mehreren Speicherzellen bestehen, aufgebaut ist, wobei Zellen und Ebenen dynamisch verschaltet sind und/oder aus dem Speicher gleichzeitig unterschiedliche Spannungsniveaus für die verschiedenen Verbraucher (8, 9) zur Verfügung stellbar sind.

16. Energiespeicher nach Anspruch 14 oder 15, **dadurch gekennzeichnet, dass** die Energie aus primären und/oder sekundären Energiequellen (5, 7) und/oder kuperierte Energie der/des Verbraucher/s (8, 9) beziehbar ist und/oder gleichzeitig Lade und Entladeprozesse stattfinden.
